# EUROPEAN PATENT APPLICATION

(11) **EP 2 894 594 A1**
(43) Date of publication of application: **15.07.2015**
(21) Application number: 14305027.6
(22) Date of filing: 09.01.2014
(51) Int. Cl.: G06Q 10/10, G06F 9/50

(54) **Method and device for providing access to a task**

(71) Applicant: Thomson Licensing, 92130 Issy-les-Moulineaux (FR)
(72) Inventor: Maetz, Yves, 35576 Cesson-Sévigné (FR); Eluard, Marc, 35576 Cesson-Sévigné (FR); Zhu, Yiwei, 35576 Cesson-Sévigné (FR)
(74) Representative: Desvignes, Agnès

(57) **Abstract**

In a collaborative work environment, a participant chooses a task to perform and the identifier of the task is sent (S22) from a participant device (110) to a first server (120). The first server (120) creates (S23) a Virtual Machine that is configured with a dedicated tool and appropriate data, instantiates (S24) the Virtual Machine on a second server (130), and sends (S25) connection information to the participant device (110). Using the connection information, the participant device (110) connects to the Virtual Machine on the second server (130) and works (S26) on the task. It is preferred that remote desktop technology is used so that the participant works through a remote desktop client on the participant device (110), while the work in effect is done on the second server (130). The invention can thus, at least to a certain extent, ensure that a specified participant uses a dedicated tool to work on data to be treated by the task.

## Description

### TECHNICAL FIELD

The present invention relates generally to computer systems and in particular to security in systems for collaborative work environments.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Collective creation is sometimes used in domains as varied as software programming, online video edition and could be used in the future in cinema post-production, sometimes through the use of so-called crowdsourcing platforms. In collective creation environments participants are assigned tasks. To perform a task, the participant should use a specified tool and work on specified data.

However, there are various problems linked to the control of such tasks, such as:
- Participants may use inappropriate tools, because of habits, ignorance, and so on. This may result in problems owing to lack of compatibility. For example, Microsoft Office 2013 includes specific features that were not available in Microsoft Office 2010 or LibreOffice^{®}.
- Participants may use inappropriate data, for example by downloading an erroneous version of the data. Moreover a participant may also use a tool for personal needs, thus working on personal data instead of the assigned data.
- An unauthorized participant may perform the task, for example when a highly skilled participant "delegates" a task to a less qualified participant. In this case, the skills and the accreditation expected of the participant are not respected.
- Participants may steal or lose data.

It will be appreciated that it is desired to have a solution that overcomes at least part of the problems of collaborative systems. The present invention provides such a solution.

### SUMMARY OF INVENTION

In a first aspect, the invention is directed to a method for allowing a user access to a task. A first server sends a list of tasks to a user device, receives an identifier of a task chosen by a user from the user device, generates a virtual machine for the chosen task with a tool dedicated to the task and data to be processed by the task, instantiates the virtual machine on a second server, and sends to the user device information allowing connection to the virtual machine.

In a first embodiment, the second server receives user actions from the user device, performs the user actions on the specified data to obtain modified data, and returns a representation of the modified data to the user device. It is preferred that the second server uses remote desktop techniques. It is advantageous that the user actions are received from a remote desktop client on the user device and the representation of the modified data is returned to the remote desktop client.

In a second embodiment, the first server and the second server are implemented on a single device.

In a third embodiment, the first server further protects at least some transmitted or received information using at least one security technique. It is preferred that the at least one security technique comprise encryption and watermarking.

In a fourth embodiment, the user device receives user actions from the user, sends the user actions to the second server, receives a representation of the modified data from the second server, and displays the modified data to the user.

In a second aspect, the invention is directed to a server for allowing a user access to a task. The server comprises a processor configured to send a list of tasks to a user device, receive an identifier of a task chosen by a user from the user device, generate a virtual machine for the chosen task with a tool dedicated to the task and appropriate data to process by the task, instantiate the virtual machine on a second server, and send to the user device information allowing connection to the virtual machine.

In a first embodiment, the server is embodied on a device that further embodies the second server. It is preferred that the processor is further configured to receive user actions from the user device, perform the user actions on the specified data to obtain modified data, and return a representation of the modified data to the user device. It is advantageous that

In a second embodiment, the processor is configured to use remote desktop techniques to receive the user actions and to return the representation of the modified data.

In a third embodiment, the processor is further configured to receive the user actions from a remote desktop client on the user device and to return the representation of the modified data to the browser.

In a fourth embodiment, the processor is further configured to protect at least some transmitted or received information using at least one of encryption and watermarking.

### BRIEF DESCRIPTION OF DRAWINGS

Preferred features of the present invention will now be described, by way of non-limiting example, with reference to the accompanying drawings, in which
Figure 1 illustrates an exemplary system in which the invention is implemented; and
Figure 2 illustrates a preferred embodiment of a method according to a preferred embodiment of the present invention.

### DESCRIPTION OF EMBODIMENTS

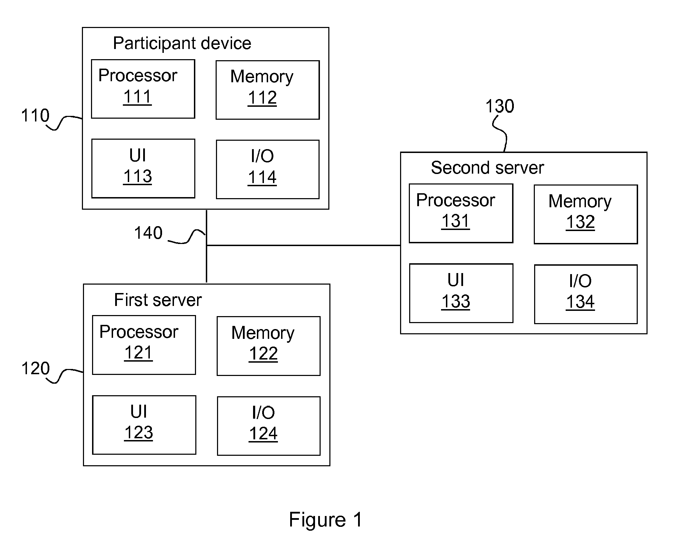

Figure 1 illustrates an exemplary system in which the invention is implemented. The system comprises a first computing device ("participant device") 110, a second computing device ("first server") 120 and a third computing device ("second server") 130. The first, second and third devices 110, 120, 130 can be any kind of suitable computer or device capable of performing calculations, such as a standard Personal Computer (PC), a workstation, a smartphone and a tablet. The first, second and third devices 110, 120, 130 each preferably comprise at least one processor 111, 121, 131, internal of external memory 112, 122, 132, a user interface 113, 123, 132 for interacting with a user (i.e. participant), and a second interface 114, 124, 134 for interaction with other devices over a connection 140 such as the Internet, although other connections may also be used as for instance a direct connection between the two servers. The skilled person will appreciate that the illustrated devices are very simplified for reasons of clarity and that real devices in addition would comprise features such as power supplies and persistent storage.

A main inventive idea of the present invention is to create and enforce a strong relationship between the elements that constitute a task: the participant that performs the task, the tool used to perform the task and the data to be used and the resulting data. In brief, a participant selects a task from a list of tasks and informs a server of the selected task. In response, the server configures a safe and secure environment with the appropriate data and application (i.e. tool), which prevents errors and, at least partly, malicious behaviour. In this context, "safe" is intended to mean that the right tool is used to process the right data, while "secure" is intended to mean that the data is protected (using for instance secure connections) against, for example theft and unauthorized copying. For more security, it is also possible to block all outgoing ports except the ones controlled by the server via the tool in order to make it impossible to send the data to another device than any of the servers involved in the data processing and/or to use an encrypted partition for storing the data in order to make it impossible for another process or user to read them.

Thus the participant takes part in a collaborative creation project through an online project environment in which a server stores project data and provides access to participants through a web site available to browsers running on distant devices. The web site organizes information and tasks. A given participant connects to the server, provides authentication and, in case of successful authentication, can access the information, which makes it possible to choose a task to perform.

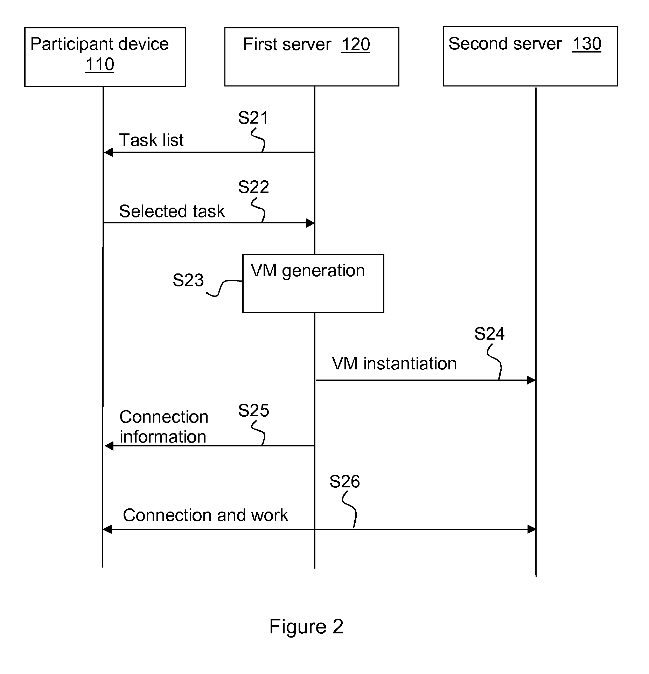

Figure 2 illustrates a preferred embodiment of a method according to a preferred embodiment of the present invention. A task list is sent S21 from the first server 120 to the participant device 110. This can be done in response to a request, explicit or implicit, from the participant device 110. The task list can comprise tasks assigned to the participant, but it is also possible that it comprises other tasks, i.e. non-assigned tasks, or a combination thereof.

The participant can then choose a task to perform. The identifier of the chosen task is sent S22 from the participant device 110 to the first server 120.

In response, the first server 120 creates S23 a Virtual Machine (VM) that is configured with a dedicated tool (i.e. dedicated to the task) and the appropriate data (i.e. the data that is to be treated by the task). It will be appreciated that this can ensure that the appropriate tool and data are used to perform the task; in other words, the safety requirement is satisfied.

The first server 120 then instantiates S24 the Virtual Machine on the second server 130. It will be appreciated that it is possible that the first server 120 and the second server 130 are embodied on the same device. The first server 120 then sends S25 connection information to the participant device 110.

Using the connection information, the participant device 110 connects to the Virtual Machine on the second server 130 and performs S26 the task by using the dedicated tool on the appropriate data.

It is preferred that the servers 120, 130 communicate with a remote desktop client such as a browser (which is used as a non-limitative example) on the participant device 110. This makes it possible for the participant to interact with the tool through the browser only, while the operations are in effect performed on the second server 130; in other words, remote desktop technology is used. This avoids the installation on the participant device 110 of the required tools to perform the task and to copy the data. In addition, no additional proprietary or dedicated software needs to be installed on the participant device 110. The use of this technology means that the browser sends indications about participant actions - e.g. mouse movement and button clicks - to the second server 130, which receives this information, performs the actions and updates the screen of the browser, essentially by returning a kind of snapshot of the Virtual Machine screen. As these communications are sufficient for the functioning of the invention, this provides security and limits (or removes) the risks of participants losing or stealing data.

The skilled person will appreciate that it is preferred to protect (advantageously by using encryption techniques, i.e. encrypting outgoing data and decrypting incoming data) the connection between the participant device 110 and the servers 120, 130 through the use of protocols, e.g. Hypertext Transfer Protocol Secure (HTTPS), that encrypt information going back and forth.

A typical task is working on graphics for as yet unreleased movies. In this situation, the confidentiality of the content is usually a big issue, since leakage of an image of the next superhero of a Hollywood blockbuster could have dramatic side effects such as unauthorized manufacturing of merchandising items related to this superhero.

To prevent leakage by the participant (e.g. by taking a picture of the browser screen with a camera or a mobile phone - the so-called "analog hole" which remains open even if all of the digital outlets from the participant device except the connection with the servers are blocked), it is preferred to have the possibility for the servers to embed an identifier of the task or of the user on the screen. Then the identifier would allow to tracing the origin of a leakage.

Prior art image watermarking techniques can be used for this purpose. A watermark comprising the identifier is embedded at the server side of the Virtual Machine Interface in the snapshot that is sent to the participant device. It will be understood that it is preferred that the watermark technique is resistant to attacks intending to remove or replace the watermark.

In the field of image editing, many different software programs are available. These programs are usually very complete and offer a wide variety of possibilities to users. In this case, it can be interesting to limit the functionality to ensure that the user cannot do what is not needed. Thus, when instantiating the Virtual Machine, the tool is configured with only the needed modules. Further and as previously explained, as the correct data is automatically loaded, it is preferred that the "Open" function is not available so that it is impossible to import another set of data or possible to browse the Virtual Machine file system. It will be appreciated that it is only possible to work on the data preloaded in the Virtual Machine. In addition, it is preferred that the "Save" functionality is restricted to a predefined location and that the "Save as" functionality is disabled. It is preferred that this predefined location is the first server 120, but it may also for example be the second server 130 if this server transfers the processed data to the first server 120 when the Virtual Machine is terminated. The skilled person will appreciate that some of these restrictions may be implemented by using security modules at the operating system level (e.g. AppArmor, SELinux).

In the field of collaborative software programming, each participant works on one or more parts of the code. The task of programming can be seen as equivalent to editing a file using a text editor. The text editor and the file can be instantiated in a Virtual Machine as described hereinbefore. The proposed solution allows to split the different parts of the code to different programmers. This allows to restrict the edition of a critical part of the software to a reduced set of trusted (or experienced) programmers while the less critical parts can be subcontracted to less trusted (or experienced) programmers.

Software programming involves other tasks such as compilation and testing. These tasks can be separated from the edition tasks using the proposed solution. According the invention the compilation task is isolated in a Virtual Machine. The testing can also be isolated similarly, using the result of the compilation. In this case, none of the users involved in these tasks have direct access to the software in its executable version.

It will thus be appreciated that the present invention provides collaborative system that ensures greater control that a task is performed by a specified participant using a specified tool to work on specified content.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A method for allowing a user access to a task, the method comprising the steps of:
at a first server (120) comprising a processor:
- sending (S21) a list of tasks to a user device (110);
- receiving (S22) an identifier of a task chosen by a user from the user device (110);
- generating (S23) a virtual machine for the chosen task with a tool dedicated to the task and data to be processed by the task;
- instantiating (S24) the virtual machine on a second server (130); and
- sending (S25) to the user device information allowing connection to the virtual machine.

2. The method of claim 1, further comprising the steps, at the second server (130), of:
- receiving (S26) user actions from the user device (110);
- performing the user actions on the specified data to obtain modified data; and
- returning a representation of the modified data to the user device (110).

3. The method of claim 2, wherein the steps performed by the second server are implemented using remote desktop techniques.

4. The method of claim 3, wherein the user actions are received from a remote desktop client on the user device (110) and the representation of the modified data is returned to the remote desktop client.

5. The method of claim 1, wherein the first server (120) and the second server (130) are implemented on a single device.

6. The method of claim 1, wherein the first server (120) further protects at least some transmitted or received information using at least one security technique.

7. The method of claim 6, wherein the at least one security technique comprise encryption and watermarking.

8. The method of claim 1, further comprising the steps, at the user device (110), of:
- receiving user actions from the user;
- sending the user actions to the second server (130);
- receiving modified data from the second server (130); and
- displaying the modified data to the user.

9. A server (120) for allowing a user access to a task, the server (120) comprising a processor (121) configured to:
- send a list of tasks to a user device (110);
- receive an identifier of a task chosen by a user from the user device (110);
- generate a virtual machine for the chosen task with a tool dedicated to the task and data to be processed by the task;
- instantiate the virtual machine on a second server (130); and
- send to the user device information allowing connection to the virtual machine.

10. The server of claim 9, wherein the server (120) is embodied on a device that further embodies the second server (130).

11. The server of claim 10, wherein the processor is further configured to:
- receive user actions from the user device (110);
- perform the user actions on the specified data to obtain modified data; and
- return a representation of the modified data to the user device (110).

12. The server of claim 9, wherein the processor is configured to use remote desktop techniques to receive the user actions and to return the representation of the modified data.

13. The server of claim 9, wherein the processor is further configured to receive the user actions from a remote desktop client on the user device (110) and to return the representation of the modified data to the browser.

14. The server of claim 9, wherein the processor is further configured to protect at least some transmitted or received information using at least one of encryption and watermarking.

15. The server of claim 9, wherein the processor is further configured to store the data to be modified by the task and the modified data.
